# EUROPÄISCHE PATENTANMELDUNG

(11) **EP 3 943 470 A1**
(43) Veröffentlichungstag der Anmeldung: **26.01.2022**
(21) Anmeldenummer: 20186721.5
(22) Anmeldetag: 20.07.2020
(51) Int. Cl.: C05D 9/00

(54) **ZUSAMMENSETZUNG ZUR BODENVERBESSERUNG**

(71) Anmelder: Hybrid Innovation GmbH, 40476 Dusseldorf (DE); AgenSysThem AG, 6300 Zug (CH)
(72) Erfinder: Kandhorov, Gavriel, 40476 Düsseldorf (DE); Sorokin, Nikolaj, 6300 Zug (CH)
(74) Vertreter: Bird & Bird LLP

(57) **Zusammenfassung**

Die vorliegende Erfindung betrifft eine Bodenhilfsstoff-Zusammensetzung umfassend ein Trägermaterial auf der Basis von Bodenstoffen natürlicher Herkunft sowie einer Stimulanz-Zusammensetzung umfassend wenigstens eine Komponente die ausgewählt ist unter Huminsäuren, Fulvosäure, Aminosäuren, Mikroelementen und Vitaminen.

Die vorliegende Erfindung betrifft auch eine Stimulanz-Zusammensetzung umfassend wenigstens eine Komponente die ausgewählt ist unter Huminsäuren, Fulvosäure, Aminosäuren, Mikroelementen und Vitaminen.

Des Weiteren betrifft die Erfindung ein Verfahren zur Herstellung der erfindungsgemäßen Zusammensetzungen sowie die Verwendung der Zusammensetzung.

## Beschreibung

Die vorliegende Erfindung betrifft eine Bodenhilfsstoff-Zusammensetzung umfassend ein Trägermaterial auf der Basis von Bodenstoffen natürlicher Herkunft sowie einer Stimulanz-Zusammensetzung umfassend wenigstens eine Komponente die ausgewählt ist unter Huminsäuren, Fulvosäure, Aminosäuren, Mikroelementen und Vitaminen.

Die vorliegende Erfindung betrifft auch eine Stimulanz-Zusammensetzung umfassend wenigstens eine Komponente die ausgewählt ist unter Huminsäuren, Fulvosäuren, Aminosäuren, Mikroelementen und Vitaminen.

Des Weiteren betrifft die Erfindung ein Verfahren zur Herstellung der erfindungsgemäßen Zusammensetzungen sowie die Verwendung der Zusammensetzung.

### HINTERGRUND

Die Schrift RU 2243657 betrifft die Aufgabe der reinen Effizienzsteigerung durch eine verzögerte Verteilung von Inhaltsstoffen in einer polymeren organischen Matrix an Pflanzen. Dabei werden synthetische Polymere als Insektizidbeschichtung für Saatgut vorgeschlagen.

Die Schrift RU 2203547 betrifft Zusammensetzungen mit einer verzögerten Abgabe von Wirkstoffen an Samen und Pflanzen. Dabei werden Mikropartikel mit einem Durchmesser von 0,2 bis 200 µm verwendet, die aus einer Polymerlösung, einem aktiven Bestandteil sowie einem organischen Lösungsmittel erhältlich sind. Als aktiver Bestandteil kommt ein Fungizid, ein Pflanzenwachstumsregulator, ein Pflanzennährstoff oder eine Kombination davon zum Einsatz. Die Mikropartikel enthalten 1 bis 50 Gewichtsprozent des Wirkstoffs, verteilt in einer Polymermatrix, die aus einem Polymer aus der Gruppe der Polymethylmethacrylate, Milchsäurepolymere, Milch- und Glykol-Copolymersäuren, Celluloseacetatbutyrat, Polystyrol, Acrylpolymer, Copolymer-Vinylpyrrolidon, Vinylacetat und andere stammt.

Die Schrift RU 2322426 betrifft ein Torfdüngemittel mit verzögerter Wirkstoffabgabe, das aus Tieflandtorf und natürlicher Zeolith besteht, welches in einem Verhältnis von 3:1 bis 3:2 durch Neodym-Ionen modifiziert wurde. Das Verfahren beschreibt natürliche Zeolithe, die für 20 bis 22 Stunden mit einer 0,01 bis 0,15 % Neodym-Sulfat Nd₂(SO₄)₃ Lösung, in einem Masseverhältnis von 1:9 bis 1: 10 zwischen natürlichem Zeolithen und Neodym-Sulfatlösung gesättigt wurde. Die Verwendung dieses komplexen Torfdüngemittels soll die Reifung beschleunigen und den Ernteertrag von Gemüse- und Futterpflanzen erhöhen, weist jedoch wegen eines Mangels in der Zusammensetzung von Düngemittel, Wachstumsstimulatoren und eine Reihe von Spurenelementen auf, die den erhofften Erfolg verhinderten.

Die Schrift RU 2305404 betrifft ein Verfahren für die verzögerte Abgabe von biologisch aktiven Inhaltsstoffen. Dabei wird eine in eine Polymermatrix eingebettete Wirkstoffverbindung beschrieben, die unter anderem Peroxid-Wasserstoff mit wachstumsfördernden und kryoprotektiven Eigenschaften enthält. Die Polymermatrix besteht aus in Wasser gelöstem Polyvinylpyrrolidon (M = 25000-30000 g/mol) in einer 1-2 % Konzentration; das Massenverhältnis von Peroxid-Wasserstoff und Polyvinylpyrrolidon beträgt 1:29-1180. Das Verfahren zur Verzögerung der Abgabe des biologisch aktiven Inhaltsstoffs an Samen und Pflanzen umfasst das Aufbringen in einer Menge von 0,3 bis 0,5 Liter der Nährstoffe pro kg Samen, die danach in einem losen Zustand getrocknet werden.

Die im Stand der Technik beschriebenen Systeme zur Bodenverbesserung sind mit verschiedenen Nachteilen behaftet, die es zu überwinden gilt.

Wesentliche Nachteile bekannter Systeme sind, dass diese weder nachhaltig noch ressourcenschonend sind. Weitere Nachteile sind, dass oft synthetische Ausgangsstoffe eingesetzt werden und/oder in der Herstellung kritische (d.h. giftige, toxische, schädliche) Ausgangsstoffe oder Hilfsstoffe verwendet werden. Ebenfalls nachteilig sind Systeme, welche nicht auf natürlichen Rohstoffen basieren und/oder nicht oder nur sehr langsam biologisch abbaubar sind und somit zur Umweltverschmutzung beitragen.

Zudem werden verschiedene weitere herausfordernde Anforderungen an neue Systeme zur Bodenverbesserung gestellt: Beispielsweise haben bekannte Systeme eine unzureichende Wasseraufnahme, ein unzureichendes Freisatzungsprofil der aktiven Substanzen, etc.

Aufgabe der vorliegenden Erfindung ist die Bereitstellung einer Bodenhilfsstoff-Zusammensetzung mit verbesserten Eigenschaften, welche die im Stand der Technik bekannten Nachteile überwinden. Insbesondere soll die Bodenhilfstoff-Zusammensetzung nachhaltig aus natürlichen Rohstoffen herzustellen sein und in der Anwendung Pflanzen sowohl als Wasserreservoir als auch als Nöhrstoffquelle dienen.

### ZUSAMMENFASSUNG DER ERFINDUNG

Die vorliegende Erfindung betrifft eine Bodenhilfsstoff-Zusammensetzung, umfassend ein Trägermaterial auf der Basis von Bodenstoffen natürlicher Herkunft sowie einer Stimulanz-Zusammensetzung umfassend wenigstens eine Komponente die ausgewählt ist unter Huminsäuren, Fulvosäure, Aminosäuren, Mikroelementen und Vitaminen.

Die erfindungsgemäße Bodenhilfsstoff-Zusammensetzung weist überraschenderweise unter anderem die folgenden Vorteile auf:
- Die Bodenhilfstoff-Zusammensetzungen basieren im Wesentlichen auf natürlichen Rohstoffen.
- Die Bodenhilfstoff-Zusammensetzungen sind nachhaltig und umweltschonend.
- Die Bodenhilfstoff-Zusammensetzungen weisen eine hohe Wasseraufnahme auf. Das aufgenommene Wasser wird kontinuierlich abgegeben, sodass Pflanzen langfristig mit Wasser versorgt werden. Dies ist insbesondere in Trocken- (Dürre-) Perioden vorteilhaft.
- Die Bodenhilfstoff-Zusammensetzungen geben die Nährstoffe mit einem vorteilhaften Freisetzungsprofil frei.
- Die Bodenhilfstoff-Zusammensetzungen ermöglichen Komponenten mit einem breiten Wirkungsspektrum.
- Die Bodenhiflsstoff-Zusammensetzungen sind effizient, sodass die Menge an etwaigen anderen Düngemitteln reduzieren werden kann.

Ein besonderer Vorteil der Bodenhilfsstoff-Zusammensetzung ist darin zu sehen, dass die Zusammensetzung die Pflanzen über die Wurzeln sowohl mit Wasser als auch mit Nährstoffen versorgt. Pflanzen wachsen vorteilhafterweise an die Bodenhilfstoff-Zusammensetzungen an und bilden Wurzeln aus. Da die Wurzeln sehr eng an die Zusammensetzung wachsen wird eine sehr effiziente Versorgung sowohl mit Wasser als auch mit Nährstoffen erreicht.

Die vorliegende Erfindung betrifft zudem ein Verfahren zur Herstellung der erfindungsgemäßen Bodenhilfsstoff-Zusammensetzung; die Verwendung der erfindungsgemäßen Bodenhilfsstoff-Zusammensetzung vorzugsweise in der Landwirtschaft; sowie ein Verfahren zur Verbesserung der Bodenqualität unter Verwendung der erfindungsgemäßen Bodenhilfsstoff-Zusammensetzung.

Ein weiterer Aspekt ist die beschriebene Stimulanz-Zusammensetzung. Diese liegt üblicherweise als wässrige Lösung vor.

Die erfindungsgemäße Bodenhilfsstoff-Zusammensetzung besitzt durch eine Sorptionstechnologie auf der einen Seite eine hohe Wasseraufnahmefähigkeit, die es ermöglicht, dass die aktiven und nachhaltigen Inhalte nicht auf einmal, sondern über einen längeren Zeitraum an den Boden abgegeben werden. Auf der anderen Seite lösen sich die Nährstoffe im Wasser und erleichtern so das Eindringen der Hilfsstoffe in den Boden. Damit wird erreicht, dass die Wirkung der Hilfsstoffe und Nährstoffe verlängert wird. Dies führt unter anderem zu einer Erhöhung der landwirtschaftlichen Produktivität der Pflanzen bei gleichzeitiger Stabilisierung der Bodenfruchtbarkeit.

Die hier beschriebene Bodenhilfsstoff-Zusammensetzung kann als ressourcenschonendes Verfahren die Wirksamkeit der landwirtschaftlichen Produktion erhöhen und gleichzeitig die toxische Umweltbelastung der bisher verwendeten vorhandenen agrochemischen Präparate in den landwirtschaftlichen Strukturen vermindern. Weiterhin zeigt die Bodenhilfsstoff-Zusammensetzung eine verbesserte Haltbarkeit, da diese kaum von Bakterien angegriffen und zersetzt werden kann.

Die vorliegende Erfindung ist zudem in der Lage, das Wachstum landwirtschaftlicher Produkte zu beschleunigen, gleichzeitig eine längere Grünphase zu garantieren, so dass eine längere Einlagerungszeit der Nährstoffe in das Korn stattfindet, um damit die Ernteerträge zu verbessern, und die Nachhaltigkeit der Bodennutzung langfristig zu gewährleisten, was wiederum die Umweltbelastung erheblich reduziert.

Sofern die Bodenhilfsstoff-Zusammensetzung Harnstoff enthält, wird dieser in der Bodenhilfsstoff-Zusammensetzung fest gebunden. Dadurch wird der Harnstoff nicht in das Grundwasser abgetragen und ist gleichzeitig für die Pflanzen leicht zugänglich und verfügbar.

Der Einsatz der erfindungsgemäßen Bodenhilfstoff-Zusammensetzung fördert die Intensivierung biochemischer Prozesse durch das Vorhandensein von Huminsäuren, Fulvosäure und Aminosäuren und somit die Produktivität von Pflanzen.

### AUSFÜHRLICHE BESCHREIBUNG

Die Erfindung ist im Bereich der landwirtschaftlichen Nutzung, genauer der Agrarchemie und organischen Düngemitteln anzusiedeln. Dabei stehen u.a. hochkomplexe Bodenhilfsstoffe auf Basis von Bodenstoffen natürlicher Herkunft, welche mit Huminsäuren, Fulvosäure, Aminosäuren, Mikroelementen, Vitaminen und/oder Harnstoff angereichert sind, im Fokus.

Die erfindungsgemäße Bodenhilfsstoff-Zusammensetzung umfasst ein Trägermaterial auf der Basis von Bodenstoffen natürlicher Herkunft. Vorzugsweise wird dieses Trägermaterial aus Sandboden und/oder Zeolith-haltigem Boden gewonnen.

Sandboden ist eine dem Fachmann bekannte Bodenart Diese Bodenart wird gut durchlüftet und erwärmt sich schnell; das Regenwasser wird gut aufgenommen; der Boden trocknet schnell ab und lässt sich leicht bearbeiten. Andererseits kühlt dieser Boden schnell ab, Wasser und Nährstoffe werden leicht in das Grundwasser ausgewaschen. Dieser Boden erfordert zur Bestandsführung Beregnungs- und Gießmöglichkeiten sowie Humuszufuhr und mehrere kleine Düngergaben.

Günstige Kulturen sind Erdbeeren, Spargel und Tabak. Sandboden umfasst auch die Bodenarten humoser Sandboden und lehmiger Sandboden.

Besonders bevorzugt handelt es sich bei dem Trägermaterial um Trepel sedimentärer Herkunft. Ein besonderer Vorteil von Trepel sedimentärer Herkunft ist, dass dieser nach einem Jahr im Boden vollständig zerfällt.

Die erfindungsgemäße Bodenhilfsstoff-Zusammensetzung umfasst eine Stimulanz-Zusammensetzung umfassend wenigstens eine Komponente die ausgewählt ist unter Huminsäuren, Fulvosäure, Aminosäuren, Mikroelementen und Vitaminen. Die Stimulanz-Zusammensetzung ist üblicherweise wässrig flüssig.

Huminsäuren sind natürlich in Humusböden, Torf und Braunkohle vorkommende Huminstoffe. Die Gruppe verschiedener Säuren bildet sich durch partiellen Abbau von Resten abgestorbener Lebewesen im Boden. Sie erfüllen in Humusböden eine wichtige Funktion als Bioeffektor und Speicher für basische Stickstoffverbindungen. Huminsäuren sind beispielsweise beschrieben in https://de.wikipedia.org/wiki/Huminsäuren.

Fulvosäuren (auch: Fulvinsäuren) sind eine Gruppe organischer Säuren mit uneinheitlicher Zusammensetzung. Sie entstehen wie die Huminsäuren und die Humine bei der Zersetzung von Pflanzenmaterial (Humifizierung), haben jedoch im Vergleich zu den Huminsäuren eine deutlich geringere molare Masse und stärker sauren Charakter. Fulvosäuren sind deutlich besser in saurem Milieu löslich als Huminsäuren, was man zur Trennung der beiden Stoffgruppen nutzen kann.

Huminsäuren und Fulvosäuren sind beispielsweise beschrieben in Römpp Online, Georg Thieme Verlag, Eintrag "Huminstoffe" sowie in Wikipedia unter "Huminsäuren" und "Fulvosäuren".

Aminosäuren, Mikroelemente und Vitamine sind dem Fachmann geläufig und in der Fachliteratur ausführlich beschrieben, beispielsweise in Wikipedia.

Vorzugsweise umfasst die Stimulanz-Zusammensetzung wenigstens eine Huminsäure, wenigstens eine Fulvosäure, wenigstens eine Aminosäure, wenigstens ein Mikroelement und wenigstens ein Vitamin.

Vorzugsweise weist die Stimulanz-Zusammensetzung einen pH-Wert (in wässriger Lösung) von 4,0 bis 7,0, weiter bevorzugt von 5.0 bis 6,5 auf.

Vorzugsweise weist die Stimulanz-Zusammensetzung einen Gehalt an Fulvosäuren von 10 bis 35 %, weiter bevorzugt von 20 bis 30 % auf. Vorzugsweise weist die Stimulanz-Zusammensetzung einen Gehalt an Huminsäuren von 2 bis 15 %, vorzugsweise von 5 bis 10 % auf.

Vorzugsweise umfasst die Stimulanz-Zusammensetzung wenigstens 10, weiter bevorzugt wenigstens 15 Aminosäuren. Vorzugsweise umfasst die Stimulanz-Zusammensetzung wenigstens 5, weiter bevorzugt wenigstens 8 Vitamine.

Die erfindungsgemäße Bodenhilfsstoff-Zusammensetzung umfasst eine Stimulanz-Zusammensetzung umfassend vorzugsweise Huminsäuren, Fulvosäuren, Aminosäuren, Mikroelemente und Vitamine.

In einer besonders bevorzugten Ausführungsform umfasst die Stimulanz-Zusammensetzung 25 Gew.-% Fulvosäuren, 8 Gew.-% Huminsäuren, 18 Aminosäuren, 10 Vitamine, Mikronährstoffe und Wasser.

Die erfindungsgemäße Stimulanz-Zusammensetzung wird üblicherweise aus Torf gewonnen.

Bei der erfindungsgemäßen Bodenhilfsstoff-Zusammensetzung beträgt das Gewichtsverhältnis von Trägermaterial zur Stimulanz-Zusammensetzung vorzugsweise 1000:50 bis 1000:0,1, vorzugsweise 1000:10 bis 1000:1.

Die erfindungsgemäße Bodenhilfsstoff-Zusammensetzung umfasst vorzugsweise auch Harnstoff. Der Harnstoffgehalt liegt vorzugsweise unter 1 %, bezogen auf die Zusammensetzung. Weiter bevorzugt umfasst die Bodenhilfsstoff-Zusammensetzung Harnstoff in einer Konzentration von 0,01 bis 0,9 Gew.-%, bezogen auf die Bodenhilfsstoff-Zusammensetzung. Ein besonderer Vorteil von Harnstoff ist, dass die Aminosäuren durch Harnstoff zusätzlich aktiviert werden.

Die erfindungsgemäße Bodenhilfsstoff-Zusammensetzung kann optional weitere Komponenten umfassen, beispielsweise Torf, der vorzugsweise fein vermahlen ist. Das Gewichtsverhältnis von Trägermaterial zu der weiteren Komponente beträgt vorzugsweise 1000:50 bis 1000:0,1, vorzugsweise 1000:10 bis 1000:1. Ein besonderer Vorteil von Torf ist die Nährstoffversorgung von Gräsern.

### Beispielshafte Zusammensetzungen sind:

Eine erste besonders bevorzugte Bodenhilfsstoff-Zusammensetzung ist erhältlich aus 4 ml wässriger Stimulanz-Zusammensetzung, 1 kg Trepel und 8 g Harnstoff in 50 ml Wasser.

Eine zweite besonders bevorzugte Bodenhilfsstoff-Zusammensetzung ist erhältlich aus 8 ml wässriger Stimulanz-Zusammensetzung, 1 kg Trepel und 8 g Harnstoff in 46 ml Wasser.

Eine dritte besonders bevorzugte Bodenhilfsstoff-Zusammensetzung ist erhältlich aus 8 ml wässriger Stimulanz-Zusammensetzung, 1 kg Trepel und 8 g Harnstoff in 46 ml Wasser sowie 4 g fein vermahlenem Torf.

In diesen Zusammensetzungen wird besonders bevorzugt thermisch behandelter Trepel eingesetzt, wie er hierin beschrieben ist.

In einer bevorzugten Ausführungsform ist die erfindungsgemäße Bodenhilfsstoff-Zusammensetzung nach dem folgenden Verfahren erhältlich:
a) Bereitstellen des Bodenstoff natürlicher Herkunft;
b) Mechanisches Zerkleinern des Bodenstoffs aus Schritt a) bis wenigstens 50 Gew.-% des Bodenstoffs eine Körnung < 5 mm aufweist;
c) Thermisches Behandeln des Bodenstoff aus Schritt b) bei Temperaturen oberhalb 200 °C;
d) Bereitstellen einer wässrigen Lösung umfassend die Stimulanz-Zusammensetzung umfassend wenigstens eine Komponente die ausgewählt ist unter Huminsäuren, Fulvosäuren, Aminosäuren, Mikroelementen und Vitaminen;
e) Auftragen der wässrigen Lösung aus Schritt d) auf den Bodenstoff aus Schritt c);
f) gegebenenfalls Trocknen der Zusammensetzung aus Schritt e).

### Schritt a) des Verfahrens erfolgt bevorzugt unter den folgenden Bedingungen:

Der Bodenstoff natürlicher Herkunft wird in der Regel technisch bzw. mechanisch gewonnen. Bevorzugt wird der Bodenstoff aus Sandboden und/oder Trepel gewonnen. Besonders bevorzugt wird der Bodenstoff aus Trepel sedimentärer Herkunft gewonnen.

### Schritt b) des Verfahrens erfolgt bevorzugt unter den folgenden Bedingungen:

Der Bodenstoff aus Schritt b) wird zerkleinert, vorzugsweise bis wenigstens 80 Gew.-% des Bodenstoffs eine Körnung < 5 mm aufweist. Weiter bevorzugt weisen wenigstens 50 Gew.-% des Bodenstoffs eine Körnung von 1 bis 3 mm auf. Speziell bevorzugt weist wenigstens 80 Gew.-% des Bodenstoffs eine Körnung von 1 bis 3 mm auf.

### Schritt c) des Verfahrens erfolgt bevorzugt unter den folgenden Bedingungen:

Der Bodenstoff aus Schritt b) wird vorzugsweise bei Temperaturen von wenigstens 200 °C für mindestens 30 min thermisch behandelt. Weiter bevorzugt erfolgt zunächst ein Aufheizen auf wenigstens 400 °C, bevorzugt wenigstens 600 °C für wenigstens 5 min und anschließend wird der Bodenstoff bei wenigstens 300 °C, bevorzugt wenigstens 400 °C für wenigstens 30 min thermisch behandelt. Die totale thermische Behandlungszeit beträgt vorzugsweise 30 bis 120 min, weiter bevorzugt 45 bis 90 min.

### Schritt d) des Verfahrens erfolgt bevorzugt unter den folgenden Bedingungen:

In Schritt d) wird die Stimulanz-Zusammensetzung aufgetragen, die als wässrige Lösung vorliegt.

Die wässrige Stimulanz-Lösung ist im Wesentlichen frei von organischen Lösungsmitteln. Die wässrige Stimulanz-Lösung ist im Wesentlichen frei von Glykolen. Insbesondere sind die Zusammensetzungen frei von organischen Lösungsmitteln und frei von Glykolen.

Die wässrige Lösung umfasst vorzugsweise Fulvosäuren, Huminsäuren, Aminosäuren, Vitamine und Mikroelemente, insbesondere wie hierin beschrieben.

Sofern Harnstoff zugegeben bzw. aufgesprüht wird, wird vorzugsweise eine wässrige Lösung von 10 bis 20 Gew.-%, bevorzugt 14 bis 17 Gew.-% eingesetzt. Vorzugsweise umfasst die aufzusprühende Lösung Harnstoff.

### Schritt e) des Verfahrens erfolgt bevorzugt unter den folgenden Bedingungen:

Das Auftragen der Stimulanz-Zusammensetzung erfolgt vorzugsweise durch Aufsprühen der wässrigen Lösung der Stimulanz-Zusammensetzung in einer Mischtrommel. Dabei wird die Mischtrommel langsam gedreht, d.h. bei höchstens 15 Drehungen/min.

Das Auftragen erfolgt in der Regel bei Temperaturen in Bereich von 10 bis 40 °C.

In Schritt e) des Verfahrens können zusätzlich weitere Komponenten aufgesprüht werden. Vorzugsweise wird etwaiger Harnstoff in Schritt e) aufgesprüht.

### Schritt f) des Verfahrens ist optional. Sofern die Zusammensetzung getrocknet wird erfolgt dies bevorzugt unter den folgenden Bedingungen:

In einer besonders bevorzugten Ausführungsform ist die Bodenhilfsstoff-Zusammensetzung erhältlich aus 1000 Gewichtsteilen thermisch behandeltem Bodenstoff, vorzugsweise Trepel, und 4 Gewichtsteilen der wässrigen Stimulanz-Zusammensetzung.

In einer besonders bevorzugten Ausführungsform ist die Bodenhilfsstoff-Zusammensetzung erhältlich aus 1000 Gewichtsteilen thermisch behandeltem Bodenstoff, vorzugsweise Trepel, und 8 Gewichtsteilen der wässrigen Stimulanz-Zusammensetzung.

Weiter bevorzugt ist die erfindungsgemäße Bodenhilfsstoff-Zusammensetzung nach dem folgenden Verfahren erhältlich:
a) Bereitstellen des Bodenstoff natürlicher Herkunft der aus Trepel sedimentärer Herkunft gewonnen wird;
b) Mechanisches Zerkleinern des Bodenstoffs aus Schritt a) bis wenigstens 50 Gew.-% des Bodenstoffs eine Körnung < 5 mm aufweist;
c) Thermisches Behandeln des Bodenstoff aus Schritt b) bei Temperaturen von wenigstens 400 °C für eine Zeit von wenigstens 30 min;
d) Bereitstellen der wässrigen Lösung umfassend die Stimulanz-Zusammensetzung umfassend Huminsäure(n), Fulvosäure(n), Aminosäure(n), Mikroelemente(n) und Vitamine(n); und zusätzlich umfassend Harnstoff;
e) Auftragen der wässrigen Lösung aus Schritt d) auf den Bodenstoff aus Schritt c);
f) Trocknen der Zusammensetzung aus Schritt e).

Selbstverständlich können die verschiedenen Merkmale des Verfahrens bzw. der verschiedenen Schritte entsprechend kombiniert werden.

Die erfindungsgemäßen Zusammensetzungen sind in der Regel im Wesentlichen frei von Kunststoffen. Insbesondere sind die Zusammensetzungen frei von Kunststoffen.

Die erfindungsgemäßen Zusammensetzungen sind in der Regel im Wesentlichen frei von chemischen Lösungsmitteln. Insbesondere sind die Zusammensetzungen frei von chemischen Lösungsmitteln.

Die erfindungsgemäßen Zusammensetzungen sind in der Regel im Wesentlichen frei von chemischen Zusätzen außer Harnstoff. Insbesondere sind die Zusammensetzungen frei von chemischen Zusätzen außer Harnstoff.

Ein weiterer Gegenstand der Erfindung ist die hierin offenbarte Stimulanz-Zusammensetzung sowie eine wässrige Lösung der Stimulanz-Zusammensetzung. Die Stimulanz-Zusammensetzung umfasst vorzugsweise wenigstens eine Komponente die ausgewählt ist unter Huminsäuren, Fulvosäuren, Aminosäuren, Mikroelementen und Vitaminen. Vorzugsweise umfasst die Stimulanz-Zusammensetzung wenigstens eine Huminsäure, wenigstens eine Fulvosäure, wenigstens eine Aminosäure, wenigstens ein Mikroelement und wenigstens ein Vitamin.

Die Stimulanz-Zusammensetzung ist üblicherweise flüssig.

Die Stimulanz-Zusammensetzung liegt besonders bevorzugt als wässrige Lösung vor, wobei der Gesamtgehalt an Huminsäuren, Fulvosäuren, Aminosäuren, Mikroelementen und Vitaminen in Bereich bei mehr als 20 Gew.-% liegt, bevorzugt bei mehr als 25 Gew.-% liegt.

Bevorzugt ist der pH-Wert der Lösung kleiner als 7, weiter bevorzugt nicht höher als pH=6.

Vorteile der Stimulanz-Zusammensetzung sind das vereinfachte Ausbringen der Wirkstoffe an Pflanzen sowie die ideale Verfügbarkeit der Nährstoffe. Die Stimulanz-Zusammensetzung eignet sich vorteilhafter Weise für die Vorsaatbehandlung von Saatgut, Pflanzenmaterial sowie für die Wurzel-Behandlung und das Sprühen während der gesamten Vegetationsperiode aller Arten von Kulturpflanzen auf offenem und geschütztem Boden. Ein weitere vorteilhafte Einsatzbereiche sind Tropfbewässerungssysteme und Hydrokultur.

Die Stimulanz-Zusammensetzung wird vorzugsweise aus Torf hergestellt. Besonders bevorzugt ist die Gewinnung aus reinem Torf ohne Zugabe von Chemikalien.

Ein weiterer Gegenstand der Erfindung ist ein Verfahren zur Verbesserung der Bodenqualität unter Verwendung der erfindungsgemäßen Bodenhilfsstoff-Zusammensetzung. Ein weiterer Gegenstand der Erfindung ist ein Verfahren zur Verbesserung der Bodenqualität unter Verwendung der erfindungsgemäßen Stimulanz-Zusammensetzung.

Vorzugsweise wird die erfindungsgemäße Bodenhilfsstoff-Zusammensetzung und /oder der erfindungsgemäßen Stimulanz-Zusammensetzung in der Landwirtschaft auf dem Feld verwendet.

Die Bodenhilfsstoff-Zusammensetzung kann durch maschinelles Ausstreuen in einer Menge von etwa 300 bis 500 kg/ha verteilt werden. Alternativ kann die Bodenhilfsstoff-Zusammensetzung direkt an der Pflanze bzw. der Wurzel ausgebracht werden, beispielsweise durch Unterfußdüngung.

In einer weiteren Ausführungsform wird die erfindungsgemäße Bodenhilfsstoff-Zusammensetzung und/oder die Stimuanz-Zusammensetzung auf Saatgut aufgetragen, beispielsweise mittels Saatgutverkapselung und/oder Saatgutinkrustierung. Insbesondere eignen sich die Stimuanz-Zusammensetzungen zur Saatgutverkapselung und/oder Saatgutinkrustierung.

Ein weiterer Gegenstand der Erfindung ist die Verwendung der erfindungsgemäßen Bodenhilfsstoff-Zusammensetzung in der Landwirtschaft.,Sie ist besonders vorteilhaft zur Ertragssteigerung von Pflanzen, zur verzögerten Wirkstofffreisetzung, zur Wasserspeicherung und/oder als Dünger. Ein weiterer Gegenstand der Erfindung ist die Verwendung der erfindungsgemäßen Stimulanz-Zusammensetzung in der Landwirtschaft. Sie ist besonders vorteilhaft zur Ertragssteigerung von Pflanzen, zur verzögerten Wirkstofffreisetzung und/oder als Dünger.

Ein weiterer Gegenstand der Erfindung ist ein Verfahren zur Herstellung der erfindungsgemäßen Bodenhilfsstoff-Zusammensetzung. In einer besonders bevorzugten Ausführungsform erfolgt dies Vorzugsweise wird die erfindungsgemäße Bodenhilfsstoff-Zusammensetzung und/oder die erfindungsgemäße Stimulanz-Zusammensetzung bei folgenden Pflanzen und Kulturen eingesetzt: Getreide und Hülsenfrüchte, Weizen, Roggen, Gerste, Hafer, Buchweizen, Reis, Erbsen, Bohnen, Linsen, Mais, Sojabohne, Zuckerrübe, Raps, Sonnenblume, Baumwolle, Kartoffeln Gemüse, Kürbiskulturen, Kartoffeln, Tomaten, Gurken, Rote Beete Kohl, Karotten, Radieschen, Auberginen, Zucchini, Kürbisse, Zwiebel, Knoblauch, Wassermelone, Melone, Kürbis, Futterpflanzen, Mais (Silage, grünes Futter), Klee, Luzerne, Getreidegräser (Gewöhnliches Knäuelgras, Wiesenschwingel, Wiesenliesch), Futterwicke-Hafer-Mischung, Natürliche Heufelder und Weiden, Obst- und Beerenpflanzen, Apfelbaum, Birne, Kirsche, Pflaume, Pfirsich, Aprikose, Quitte, Zitrusfrüchte, Himbeeren, Johannisbeeren, Geißblatt, Stachelbeeren, Weinrebe, Erdbeeren.

### Experimentelle Daten und Versuche

### 1. Probenahme.

In Anwesenheit offizieller Personen wurde Bodenmaterial aus Sandboden bzw. Trepel sedimentärer Herkunft für die Versuchschargen ausgewählt. Die Abfüllung des Materials erfolgte in Säcke von je 25 kg Gewicht. Die Gesamtmenge des ausgewählten Bodenmaterials der Fraktur von 1-3 mm betrug 500 kg (insgesamt 20 Säcke). Zusätzlich zu der angegebenen Menge wurden 5 kg des Bodenmaterial für die Durchführung von Vorversuchen zur Bestimmung der Wasseraufnahmefähigkeit des Bodenmaterials ausgewählt.

Das Bodenmaterial aus Sandboden bzw. Trepel sedimentärer Herkunft wurde auf 600 °C erhitzt und anschließend für ca. 1 Stunde bei wenigstens 400 °C belassen.

Der Feuchtigkeitsgehalt der Ausgangsprobe wurde im Labor ermittelt.

### 2. Experimentelle Bestimmung der maximalen Feuchtigkeitskapazität der Bodenstoffe.

Die Bodenstoffe sollen mit einem Konzentrat aus Huminsäuren, Fulvosäuren und Aminosäuren mit Vitaminen und Mikroelementen sowie Harnstoff <1% angereichert werden. Hierzu wurde ermittelt, in welchem Mischungsverhältnis die Stoffe zueinanderstehen dürfen, ohne dass es zu Aggregierungen der Bodenstoffe kommt.

Entsprechend wurde unter der Randbedingung, dass keine Aggregationen der Bodenstoffe auftreten dürfen, die Aufnahmefähigkeit der Bodenstoffe hinsichtlich der Feuchtekapazität experimentell bestimmt. Dieser Prozess ist nachfolgend beschrieben.
2.1. Eine Probe des Bodenmaterials mit einer Fraktion von 1-3 mm und einem Gewicht von 500 g wurde in einen sauberen, trockenen Metallbehälter mit einem Fassungsvermögen von 5 l gegeben und unter kräftigem Rühren mit 180 ml Wasser aus einer Sprayflasche bewässert. In der Probe bildeten sich große nasse Aggregierungen von Partikeln.
2.2. Eine Probe des Bodenmaterials mit einer Fraktion von 1-3 mm und einem Gewicht von 500 g wurde in einen sauberen, trockenen Metallbehälter mit einem Fassungsvermögen von 5 l gegeben und unter kräftigem Rühren mit 120 ml Wasser aus einer Sprayflasche bewässert. In der Probe bildeten sich große nasse Aggregierungen von Partikeln.
2.3. Eine Probe des Bodenmaterials mit einer Fraktion von 1-3 mm und einem Gewicht von 500 g wurde in einen sauberen, trockenen Metallbehälter mit einem Fassungsvermögen von 5 l gegeben und unter kräftigem Rühren mit 100 ml Wasser aus einer Sprayflasche bewässert. In der Probe bildeten sich große nasse Aggregierungen von Partikeln.
2.4. Eine Probe des Bodenmaterials mit einer Fraktion von 1-3 mm und einem Gewicht von 500 g wurde in einen sauberen, trockenen Metallbehälter mit einem Fassungsvermögen von 5 l gegeben und unter kräftigem Rühren mit 80 ml Wasser aus einer Sprayflasche bewässert. Aufgrund der Feuchtigkeit veränderten in der Probe einzelne Partikel ihre Farbe, eine Aggregation (Verklumpung) fand nicht statt. Diese Wassermenge (80 ml) wurde als Maximalmenge für diese Probengröße definiert.

Schlussfolgerung: Bei einer Menge von 500 g Bodenmaterial sollte ein Volumen von höchstens 60 ml pro Aminosäurelösung verwendet werden. Bezogen auf 100 kg Bodenmaterial beträgt die maximale Lösungsmenge 12000 ml (12 L). Auf Grundlage dieser Daten, kann die Menge des Konzentrats aus Huminsäuren, Fulvosäuren und Aminosäuren, der Vitamine und Mikroelemente, des Harnstoffs berechnet werden. Dabei soll der Harnstoffgehalt des fertigen Produkts unterhalb von 1 % liegen.

Unter Nutzung des zur Verfügung stehenden 250-Liter-Betonmischers zum Mischen von Bodenmaterial und der aktiven Inhaltsstoffe für die Befüllung erforderlichen Bodenmaterialgewichtes (100 kg) wurde eine Dosiertabelle Konzentrat von des Bodenmaterials mit den Konzentraten wurde eine Dosiertabelle für das Konzentrat "K" von Huminsäuren, Fulvosäuren und Aminosäuren mit Vitaminen und Mikroelementen, Harnstoff <1% zusammengestellt.

**Tabelle 1: Die Menge an Konzentrat aus Fulvo- und Huminsäuren mit Vitaminen und Mikroelementen und Harnstoff in jeder Bodenstoffcharge**

| Chargennummer | Menge der Bodenstoffe | Menge des Konzentrats "K" | Menge Harnstoff | Menge Wasser |
|---|---|---|---|---|
| 1 | 100 kg | 21 ml | 2,1 g | 670 ml |
| 2 | 100 kg | 60 ml | 6,0 g | 2000 ml |
| 3 | 100 kg | 159 ml | 15,9 g | 5330 ml |
| 4 | 100 kg | 360 ml | 36,0 g | 12000 ml |
| Summe | 400 kg | 600 ml | 60 g | 20000 ml |

Auf der Grundlage von Tabelle 1 wurden 600 ml Konzentrat aus Huminsäuren, Fulvosäuren und Aminosäuren mit Vitaminen und Mikroelementen und 60 ml Harnstoff in 20 l Wasser gelöst. Daraufhin wurden vier Bodenstoffchargen, welche zuvor wie beschrieben thermisch behandelt worden sind, mit der so vorbereiteten Lösung unter intensivem Mischen besprüht. Danach wurden jeder Charge der Bodenstoffe Proben entnommen. Die verbleibende Menge wurde in saubere Beutel abgefüllt und beschriftet. Anschließend wurde der Feuchtigkeitsgehalt jeder Probe im Labor gemessen, die Werte sind in Tabelle 2 aufgelistet.

**Tabelle 2: Feuchtegehalt der Proben**

| Probenbezeichnung | Feuchtigkeit |
|---|---|
| Reiner Bodenstoff | 2,8 % |
| Charge Nummer 1 | 4,5 % |
| Charge Nummer 2 | 6,2 % |
| Charge Nummer 3 | 9,2 % |
| Charge Nummer 4 | 17,7 % |

Anschließend wurden die Proben zur Prüfung an ein Testlabor übergeben.

### 3. Umsetzung

Komplexe Bodenhilfsstoffe auf Basis von aktivierten natürlichen Bodenstoffen, die mit einer Mischung aus Humin-, Fulvo- und Aminosäuren von nicht mehr als 1000 g pro Tonne Bodenstoff vermengt mit einem Gemisch aus Stickstoff, Phosphor und Kalium von 20 kg pro Tonne ergeben zum Düngen von Nutzpflanzen einen Boden-Hilfsstoff von etwa 300-500 kg pro ha.

### 4. Rezepturen

Ausgangsstoff ist jeweils Trepel sedimentärer Herkunft, welcher zunächst auf eine Korngröße von 1 bis 3 mm gemahlen wird und anschließend zunächst kurz bei über 600 °C, dann bei wenigstens 400 °C für insgesamt wenigstens 1 Stunde thermisch behandelt wird.
4.1: Das wie beschrieben vorbehandelte Trägermaterial wird mit einer wässrigen Lösung der Stimulanz-Zusammensetzung besprüht. Es wird 4 ml der wässrigen Stimulanz-Zusammensetzung pro kg Trepel aufgetragen. Die wässrige Stimulanz-Zusammensetzung enthält 25 Gew.-% Fulvosäure, 8 Gew.-% Huminsäuren, 18 Aminosäuren, 10 Vitaminen und Mikroelemente. Zudem werden 8 g Harnstoff pro kg Trepel aufgetragen, wobei der Harnstoff in 50 ml Wasser vollständig aufgelöst ist. Das Auftragen erfolgt indem das Trägermaterial langsamen gedreht wird (max. 10 - 15 Drehungen/min) und dabei der Lösung von Stimulanz-Zusammensetzung und Harnstoff besprüht wird.
4.2: Die Durchführung ist analog zu 4.1, jedoch mit den folgenden Abweichungen: Es wird 8 ml der wässrigen Stimulanz-Zusammensetzung pro kg Trepel aufgetragen.
4.3: Die Durchführung ist analog zu 4.1, jedoch mit den folgenden Abweichungen: Es wird 8 ml der wässrigen Stimulanz-Zusammensetzung pro kg Trepel aufgetragen. Zusätzlich wird 4 g fein vermahlender Torf pro kg Trepel beigemischt.

## Patentansprüche

1. Bodenhilfsstoff-Zusammensetzung, umfassend ein Trägermaterial auf der Basis eines Bodenstoffs natürlicher Herkunft sowie eine Stimulanz-Zusammensetzung umfassend wenigstens eine Komponente die ausgewählt ist unter Huminsäuren, Fulvosäure, Aminosäuren, Mikroelementen und Vitaminen.

2. Bodenhilfsstoff-Zusammensetzung gemäß Anspruch 1, wobei die Bodenhilfsstoff-Zusammensetzung nach dem folgenden Verfahren erhältlich ist:
a) Bereitstellen des Bodenstoffs natürlicher Herkunft;
b) Mechanisches Zerkleinern des Bodenstoffs aus Schritt a) bis wenigstens 50 Gew.-% des Bodenstoffs eine Körnung < 5 mm aufweist;
c) Thermisches Behandeln des Bodenstoff aus Schritt b) bei Temperaturen von wenigstens 200 °C;
d) Bereitstellen einer wässrigen Lösung umfassend die Stimulanz-Zusammensetzung umfassend wenigstens eine Komponente die ausgewählt ist unter Huminsäuren, Fulvosäure, Aminosäuren, Mikroelementen und Vitaminen;
e) Auftragen der wässrigen Lösung aus Schritt d) auf den Bodenstoff aus Schritt c);
f) Trocknen der Zusammensetzung aus Schritt e).

3. Bodenhilfsstoff-Zusammensetzung gemäß Anspruch 1 oder 2, wobei die Bodenhilfsstoff-Zusammensetzung nach dem folgenden Verfahren erhältlich ist:
a) Bereitstellen des Bodenstoff natürlicher Herkunft der aus Trepel sedimentärer Herkunft gewonnen wird;
b) Mechanisches Zerkleinern des Bodenstoffs aus Schritt a) bis wenigstens 50 Gew.-% des Bodenstoffs eine Körnung < 5 mm aufweist;
c) Thermisches Behandeln des Bodenstoff aus Schritt b) bei Temperaturen von wenigstens 400 °C für eine Zeit von wenigstens 30 min;
d) Bereitstellen der wässrigen Lösung umfassend die Stimulanz-Zusammensetzung umfassend Huminsäuren, Fulvosäure, Aminosäuren, Mikroelementen und Vitaminen;
e) Auftragen der wässrigen Lösung aus Schritt d) auf den Bodenstoff aus Schritt c);
f) Trocknen der Zusammensetzung aus Schritt e).

4. Bodenhilfsstoff-Zusammensetzung gemäß einem der vorherigen Ansprüche, wobei das Trägermaterial aus Sandboden, besonders bevorzugt aus Trepel sedimentärer Herkunft gewonnen wird.

5. Bodenhilfsstoff-Zusammensetzung gemäß einem der vorherigen Ansprüche, wobei die Stimulanz-Zusammensetzung wenigstens eine Huminsäure, wenigstens eine Fulvosäure, wenigstens eine Aminosäure, wenigstens ein Mikroelement und wenigstens ein Vitamin umfasst.

6. Bodenhilfsstoff-Zusammensetzung gemäß einem der vorherigen Ansprüche, wobei die Stimulanz-Zusammensetzung als wässrige Lösung vorliegt.

7. Bodenhilfsstoff-Zusammensetzung gemäß einem der vorherigen Ansprüche, wobei die Stimulanz-Zusammensetzung wenigstens 20 Gew.-%, weiter bevorzugt wenigstens 25 Gew.-%, weiter bevorzugt wenigstens 30 Gew.-% an Huminsäure(n), Fulvosäure (n), Aminosäure(n), Mikroelement(e) und Vitamin(e) umfasst, wobei die Gew.-% auf die Stimulanz-Zusammensetzung bezogen sind.

8. Bodenhilfsstoff-Zusammensetzung gemäß einem der vorherigen Ansprüche, wobei das Gewichtsverhältnis von Trägermaterial zur Stimulanz-Zusammensetzung 1000:50 bis 1000:0,1, vorzugsweise 1000:10 bis 1000:1 beträgt.

9. Bodenhilfsstoff-Zusammensetzung gemäß einem der vorherigen Ansprüche, wobei die Zusammensetzung 0,01 bis 0,9 Gew.-% Harnstoff enthält, wobei die Gew.-% auf die Bodenhilfsstoff-Zusammensetzung bezogen sind.

10. Stimulanz-Zusammensetzung gemäß einem der Ansprüche 1 bis 9, umfassend wenigstens eine Komponente die ausgewählt ist unter Huminsäuren, Fulvosäuren, Aminosäuren, Mikroelementen und Vitamine.

11. Verfahren zur Herstellung der Bodenhilfsstoffe gemäß einem der Ansprüche 1 bis 9.

12. Verwendung der Bodenhilfsstoff-Zusammensetzung gemäß einem der Ansprüche 1 bis 9 und/oder der Stimulanz-Zusammensetzung gemäß Anspruch 10 in der Landwirtschaft.

13. Verfahren zur Verbesserung der Bodenqualität unter Verwendung der Bodenhilfsstoff-Zusammensetzung gemäß einem der Ansprüche 1 bis 9 und/oder unter der Verwendung der Stimulanz-Zusammensetzung gemäß Anspruch 10.

14. Verwendung der Bodenhilfsstoff-Zusammensetzung gemäß einem der Ansprüche 1 bis 9 und/oder Verfahren zur Verbesserung der Bodenqualität unter Verwendung der Bodenhilfsstoff-Zusammensetzung gemäß einem der Ansprüche 1 bis 9, wobei die Bodenhilfsstoff-Zusammensetzung als Wasserspeicher und/oder zur Regulation der Bodenfeuchte eingesetzt wird und bevorzugt das Wasser an der Oberfläche der Bodenhilfsstoff-Zusammensetzung gespeichert wird.
